# EUROPEAN PATENT SPECIFICATION

(11) **EP 2 002 315 B1**
(45) Date of publication and mention of the grant of the patent: **16.05.2012**
(21) Application number: 07712457.6
(22) Date of filing: 06.03.2007
(51) Int. Cl.: G05B 19/042, G05B 19/10

(54) **PROGRAMMING DEVICE FOR OPERATING PARAMETERS OF A BARRIER ACTUATING SYSTEM**
PROGRAMMIEREINRICHTUNG FÜR BETRIEBSPARAMETER EINES SCHRANKENBETÄTIGUNGSSYSTEMS
DISPOSITIF DE PROGRAMMATION POUR ACTIVER LES PARAMETRES D'UN SYSTEME D'ACTIONNEMENT DE BARRIERE

(30) Priority: 14.03.2006 IT TV20060038
(43) Date of publication of application: 17.12.2008
(73) Proprietor: NICE S.P.A., 31046 Oderzo (Treviso) (IT)
(72) Inventor: MARCHETTO, OSCAR, I-31046 Oderzo (TV) (IT); TOMASELLA, SERGIO, I-31020 San Polo di Piave (TV) (IT); FIORETTI, MARCO, I-31046 Oderzo (TV) (IT)
(74) Representative: Pistolesi, Roberto
(86) International application number: PCT/EP2007/052087
(87) International publication number: WO 2007/104672

(56) References cited:
- DE-A1- 19 757 305
- DE-A1- 19 937 178
- US-A1- 2003 112 123
- US-A1- 2004 261 626
- US-B1- 6 859 671

## Description

The invention relates to a programming device for operating parameters of an actuating system.

EP 0,849,428 describes a device for programming a movable barrier. A barrier control unit makes use of operating parameters during operation, such as for example end-of-travel values, torque reference profiles for the actuating motor, time parameters, applied torque, etc. These parameters are stored in a non-volatile memory.

The programming device is an instrument which the installation operator carries with him and connects via cable to the control unit. By means of this device it is possible to download, select and enter operating parameters of the movable barrier in the memory of the control unit. During installation or at a later time, an installation operator is able to enter, as required, the parameters using the programming device, selecting them from a factory-default set and displaying their values on a display, and then transfer them into the memory of the control unit.

At the end of programming, the programming device is disconnected from the control unit and the installation operator takes it away with him. The user may only operate the barrier in a restricted manner (open or close, etc.).

The programming device is designed with the aim of being able to be easily used by expert personnel (installation operator). The numerous possible adjustments are performed via a keyboard so as to allow fast and intuitive operations. The programming device must be sight of the barrier, so that the operator is able to monitor directly the effects of the programming performed. This device is not suitable for simplified daily use by an ordinary user, owing to its complexity and its specific mode of use.

US 5,453,736 describes a programming unit which can be connected by cable to an intelligent sliding door. The programming unit comprises a keyboard and a 7-segment 4-digit LED display and allows variation of the operating parameters in a memory inside the sliding door. Part of the keyboard is intended for directly sending command signals to the sliding door, in order to check rapidly the settings which have just been modified. Another part of the keyboard can instead be used to select an operating parameter from among those in a list. With two digits the display indicates the number of the parameter selected, while with the remaining two digits it displays the value of said parameter.The operator may modify the value of the parameter, store the new value in the internal memory of the door or locally save this value in a memory of the programming device.

The parameters to be modified/programmed are chosen from among those available in a list, which one must be familiar with. The display shows the number of the current parameter, not the function associated with it. An end user, who normally does not possess a specialist technical knowledge, is likely to encounter difficulties if he/she has to program the actuating system on his/her own. The direct commands sent to the door are associated one by one with the keys of the keyboard; therefore, not only is there a limit to the number of commands which can be sent, but the user does not have any idea of what is happening, since, here too, he/she must be familiar with the relation between a key and a particular command. In this respect the information printed on the keys may not be sufficient to guide an inexpert user. In US 5,453,736 there is also no type of signal whatsoever associated with or triggered by the user's action, and this is explained by the fact that the direct commands which can be sent only have the function of obtaining immediate feedback for the installation operator, who is able to check instantaneously the effect of the adjustments made to the parameters. Finally, the disadvantages already described for EP 0,849,428 also affect this invention.

Document, US 6 589 671 describes a programming system in which different programmers are presented with different programming functions. Nevertheless, working modes of the motion system to be controlled are not taken into account.

Other programming devices with a display comprising luminous LEDs arranged in columns are known. Each column has corresponding function and the value of the function is associated in analog form with the number of LEDs which are lit. Despite the fact that this visual interface is readily understandable and simple for a non-expert user, the dimensions of the programming device, which are limited for obvious reasons, does not allow the arrangement of a large number of LED columns and therefore functions which can be displayed and programmed. It can be easily understood that this type of programming device is the result of a compromise between ease of use and programming capability: it is sufficiently complete for the user, but completely incomplete for the installation operator.

The object of the invention is to provide an efficient device for programming operating parameters of an actuating system, which can be used in a simple and immediate manner to send commands to the actuating system or to program it.

This object is achieved with a programming device for the operating parameters of an actuating system, comprising a display, characterized by operating with at least two working modes and in that at least one set of data and/or functions is associated in a uniquely defined manner with each of the at least two working modes and in that it comprises display means for displaying selectively and in an organized manner elements of the at least one set of data and/or functions on the display.

This and other objects are achieved by means of a device according to the invention, the advantages of which will be clarified more fully by the following description of an embodiment illustrated in the accompanying drawing where:
Fig. 1 shows a block diagram of the device connected to an actuating system;
Fig. 2 shows a block diagram of the device connected to more than one actuating system.

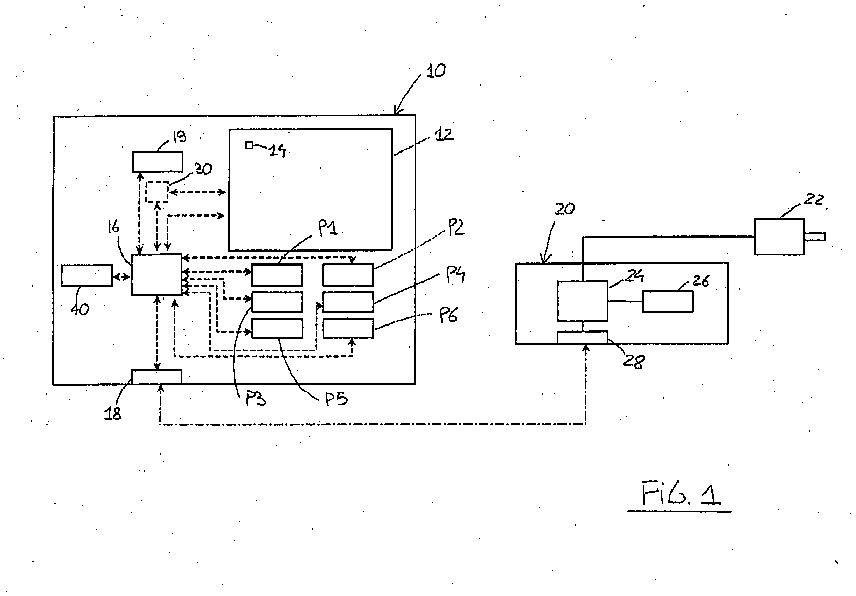

Fig. 1 shows a programming device 10 according to the invention. It comprises a dot matrix graphic display 12, six pushbuttons P1, ..., P6, a logic processing unit 16, a memory 19 and a data communication interface 18. The unit 16, for example a microprocessor, is connected to all the other components and manages their functions in a known manner, as indicated symbolically by arrows. It is clear that the number and function of the pushbuttons and the type of display used may vary (liquid crystal display, nixie display, LED segments, touch-screen, etc.). Fig. 1 also shows a known actuating system 20, which comprises a motor 22, a logic unit 24 associated with a memory 26 and a data communications interface 28. The actuating system 20 and the device 10 may transmit data to each other in a known manner via the respective interfaces 28, 18, as schematically indicated by the dot-dash line. The pushbuttons P1 and P4 have the function of displacing a cursor 14 within the display 12, the pushbutton P5 allows the user to switch the display 12 (and the device 10) between different working modes, and the pushbutton P6 causes sending of a command by the device 10 to the actuating system 20. Below only some modes will be described, but it is obvious that others may be added.

Each working mode has, associated with it, menus, which are for example structured with lists comprising lines of text or symbols which identify a function. Using the keys P1-P4 it is possible to scroll with the cursor 14 along the list, the line of text or the symbol. Once the desired function has been highlighted, a confirmation key, for example P6, is pressed, which causes execution of the function. Internally it is the function of the unit 16 to read the state of the pushbuttons P1-P6 and perform correspondingly the functions selected, sending data and commands to the actuating system 20 via the interfaces 18, 28. In a so-called "user" working mode, the device 10 is preset to interact with the operator, assuming that her/she is an inexpert operator, presumably the end user. Consequently, the visual graphics on the display 12 are simplified, appearing for example as a menu with the essential functions. Depending on the degree of complexity which is to be associated with the working mode, it is possible to show on the display 12 only options which can be selected by means of vertical scrolling with the cursor 14, disabling some of the pushbuttons P1-P6 and associating with those which are not used for the cursor 14 other convenient functions, for example the last command sent or the command most used. The entire menu may be scrollable on the display 12 or viewed page by page. These viewing modes may be programmed by the installation operator or at the factors and be executed either in an additional working mode of the device 10 or by accessing a submenu in any predefined mode, in a manner which can be completely personalized, and therefore each user may have menus which are tailor-made. If the operator chooses a command on the display 12 or activates it using P6, the unit 16 sends via the interface 18 special signals which are received by the interface 28 and interpreted by the unit 24 as actuating commands and by it executed. For example, for a command to move the roller shutter, the unit 24 accesses the memory 26 in order to read the end-of-travel values, the torque reference profile for the motor, etc., and suitably drives the motor 22. -An alternative, which is even simpler, is to show on the display 14 the list of the available functions and the associated pushbutton (or combination of pushbuttons) for activating the function. In this case, the display 12 is not interactive and does not include a cursor, but is an information screen. In a second so-called "installation" working mode, the device 10 is preset to interact with the operator, assuming that he/she is an expert user. The graphics shown on the display 12 vary, but in particular there is an increase in the number of parameters shown and therefore able to be modified and programmed. Since they may still appear as a menu (which can be managed and consulted in the same manner as with the "user" working mode), the installation operator is able to gain access to all the functions necessary for total programming of the actuating system 20, for example its radio commands and/or the information or data managed by the wireless receiver, for example via radio, of the actuating system.

As with the previous working mode, it is possible to use the same display options on the display 12. If the operator chooses a command on the display 12 and activates it with P6, the unit 16 sends via the interface 18 special signals which are received by the interface 28 and interpreted by the unit 24 as programming commands. Depending on the command, the unit 24 accesses the memory 26 in order to write the values which the operator wishes to modify, or in order to read them, sending them to the unit 16 via the interfaces 28, 18 so that they are shown on the display 12 in accordance with the given working modes and viewing settings.

In a third so-called "diagnostic/system" working mode, the device 10 is preset to interact with specialized personnel, allowing them to check and modify operating parameters (list of operations performed, check as to whether the operations have been performed in the correct manner, version of software installed, version of firmware, operating parameters, etc.) and therefore update and install new versions with new modes and functions.

In a fourth so-called "parameter" working mode, the device 10 is preset to interact with specialized personnel (or the manufacturing company) responsible for checking the system installed. For example, it is possible to check the type of components installed, their status and their characteristics.

Management of the display 12 may be performed by means of a dedicated controller 30 (shown in broken lines) which is driven by the unit 16 or by means of suitable programming of the unit 16, which directly drives the display 14. Other means are nevertheless possible. The function which it is desirable to obtain is to drive the display 12 so that it shows an organized set of data and/or functions which is associated in a uniquely defined manner with each working mode. Therefore, this is the great advantage of the invention: owing to the various elements displayed in association with each working mode, the user interacts with the device in any circumstances in the most appropriate manner: the display 12 has a low information and functional content in the mode which is presumed to be used by an inexpert user, while it has a high content in the mode for experts. It should be noted that, by driving the display 12 to show data and functions using access filters which are increasingly more selective, errors due to involuntary or unwitting mishandling of crucial system parameters are prevented. Each set of data and/or functions may have interactive components (for example parameters which can be set) or not. The set of data may be displayed separately or simultaneously, dividing up for example the area of the display 12 shown into windows.

The working modes which allow access to the most delicate data of the system may be accessible via the introduction of a "password or key" which is inserted via a combination of pushbuttons, a code or a pushbutton hidden in the structure of the device. In this case, a mask for inserting an access code is generated by the display means.

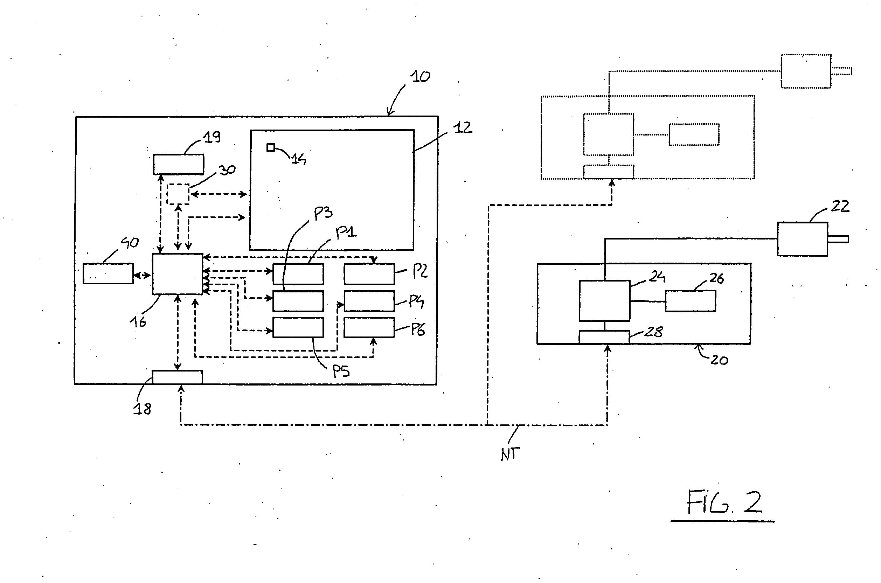

Advantageously, the device 10 may contain or be connected to a GSM modem 40 or equivalent transceiver. In this way it is possible to access the device 10 remotely, by sending commands to the latter or, via it, to the actuating system 20. In the same way the manufacturing company may check remotely the status and the efficiency of the components installed, so as to have a precise picture of any faults or malfunctions. The interfaces 18, 28 may use cable or wireless transmission means. Advantageously, this communications channel may be used both to send commands to the actuating system 20 in "user" mode and to program it, for example in "installation" mode, when a two-way data flow between the actuating system 20 and the device 10 is required. Advantageously, it is possible to control and program several actuating systems (see Fig. 2, block shown in broken lines). Each actuating system 20 has its own identification code and is connected to the interface 18 forming a network NT. All the data of the actuating systems 20 are available and can be shown on the display 12 and can be selected by means of it, one at a time or in groups, depending on the working mode of the device 10. For example, if the actuating systems 20 control the closing systems in a home, there is the possibility of combining the same information for all the automated mechanisms; for example viewing the state of all of them (whether open or closed) at a glance. These and other variants are included within the scope of protection of the following claims.

## Claims

1. Programming device (10) for the operating parameters of an actuating system (20), said programming device (10) and said actuating system (20) being adapted to transmit data to each other, said programming device (10) comprising a display (12) for displaying data and/or functions of the actuating system **characterized by** operating with at least two working modes and in that at least one set of data and/or functions is associated in a uniquely defined manner with each of the at least two working modes and in that the first working mode comprises less data and/or functions than the second working mode, wherein the display means (16; 30) are adapted for displaying selectively and in an organized manner on the display (12) elements of the at least one set of data and/or functions.

2. Device according to claim 1, **characterized in that** said at least two working modes comprise a user working mode adapted to gain access to the functions necessary for using the actuating system (20).

3. Device according to any one of the preceding claims, **characterized in that** said at least two working modes comprise an installation working mode adapted to gain access to the functions necessary for programming the actuating system (20).

4. Device according to any one of the preceding claims, **characterized in that** said at least two working modes comprise a diagnostic/system working mode adapted to check and modify operating parameters.

5. Device according to any one of the preceding claims, comprising selection means (P1, P2,..., P6) for selecting elements forming part of the at least one set of data and/or functions on the display (12).

6. Device according to any one of the preceding claims, comprising a command interface (P5, P6) by means of which execution of functions present in the at least one set may be performed.

7. Device according to any one of the preceding claims, in which the display means (16, 30) are preset to organize the set of data and/or functions in menus.

8. Device according to any one of the preceding claims, in which the display means (16, 30) are preset to display a mask for inserting an access code.

9. Device according to any one of the preceding claims, comprising means for selecting the working mode.

10. Device according to any one of the preceding claims, comprising means for receiving/transmitting data from and to a remote control unit, the receiving/transmitting means being incorporated in the device so as to allow remote control thereof.

11. Device according to any one of the preceding claims, in which an working mode is associated with a set of data and/or functions relating to the status of the actuating system (20).

12. Device according to any one of the preceding claims, in which an working mode is associated with a set of data and/or functions relating to the operating parameters of the actuating system (20).

13. Device according to any one of the preceding claims, comprising data receiving/transmitting means for sending commands and for programming several actuating systems (20) by means of a data network (NT).

14. Device according to Claim 13, comprising means for accessing operating parameters of an actuating system (20) connected to the network (20), such as radio codes and/or information or data managed by a wireless receiver present in the actuating system (20).

15. Device according to Claim 10, wherein the receiving/transmitting means comprise a GSM transceiver.

16. Device according to any one of the preceding claims wherein the actuating system (20) is a movable barrier.

## Patentansprüche

1. Programmiervorrichtung (10) für die Betriebsparameter eines Betätigungssystems (20), wobei die Programmiervorrichtung (10) und das Betätigungssystem (20) daran angepasst sind, Daten zueinander zu übertragen, wobei die Programmiervorrichtung (10) eine Anzeigevorrichtung (12) zum Anzeigen von Daten und/oder Funktionen des Betätigungssystems aufweist, **gekennzeichnet durch** einen Betrieb mit zumindest zwei Arbeitsmodi, und **gekennzeichnet dadurch, dass** zumindest ein Satz von Daten und/oder Funktionen in einer eindeutig definierten Weise mit jedem der zumindest zwei Arbeitsmodi verknüpft ist und dass der erste Arbeitsmodus weniger Daten und/oder Funktionen als der zweite Arbeitsmodus aufweist, wobei die Anzeigeeinrichtung (16; 30) daran angepasst ist, wahlweise und in einer organisierten Weise an der Anzeigevorrichtung (12) Elemente des zumindest einen Satzes von Daten und/oder Funktionen anzuzeigen.

2. Vorrichtung gemäß Anspruch 1, **dadurch gekennzeichnet, dass** die zumindest zwei Arbeitsmodi einen Benutzerarbeitsmodus aufweisen, der daran angepasst ist, einen Zugang zu den Funktionen zu gewinnen, die zum Verwenden des Betätigungssystems (20) erforderlich sind.

3. Vorrichtung gemäß einem der vorherigen Ansprüche, **dadurch gekennzeichnet, dass** die zumindest zwei Arbeitsmodi einen Installationsarbeitsmodus aufweisen, der daran angepasst ist, einen Zugang zu den Funktionen zu gewinnen, die zum Programmieren des Betätigungssystems (20) erforderlich sind.

4. Vorrichtung gemäß einem der vorherigen Ansprüche, **dadurch gekennzeichnet, dass** die zumindest zwei Arbeitsmodi einen Diagnose-/Systemarbeitsmodus aufweisen, der daran angepasst ist, Betriebsparameter zu überprüfen und abzuwandeln.

5. Vorrichtung gemäß einem der vorherigen Ansprüche, mit einer Auswahleinrichtung (P1, P2, ..., P6) zum Auswählen von Elementen, die einen Teil des zumindest einen Satzes von Daten und/oder Funktionen bilden, an der Anzeigevorrichtung (12).

6. Vorrichtung gemäß einem der vorherigen Ansprüche, mit einer Befehlsschnittstelle (P5, P6), mittels der eine Ausführung von Funktionen durchgeführt werden kann, die in dem zumindest einen Satz vorhanden sind.

7. Vorrichtung gemäß einem der vorherigen Ansprüche, bei der die Anzeigeeinrichtung (16, 30) voreingestellt ist, um den Satz von Daten und/oder Funktionen in Menüs zu organisieren.

8. Vorrichtung gemäß einem der vorherigen Ansprüche, bei der die Anzeigeeinrichtung (16, 30) voreingestellt ist, um eine Maske zum Einfügen eines Zugangscodes anzuzeigen.

9. Vorrichtung gemäß einem der vorherigen Ansprüche, mit einer Einrichtung zum Auswählen des Arbeitsmodus.

10. Vorrichtung gemäß einem der vorherigen Ansprüche, mit einer Einrichtung zum Empfangen/Übertragen von Daten von und zu einer Fernsteuereinheit, wobei die Empfangs/Übertragungseinrichtung in der Vorrichtung so eingebaut ist, dass deren Fernsteuerung ermöglicht ist.

11. Vorrichtung gemäß einem der vorherigen Ansprüche, bei der ein Arbeitsmodus mit einem Satz von Daten und/oder Funktionen verknüpft ist, der sich auf den Status des Betätigungssystems (20) bezieht.

12. Vorrichtung gemäß einem der vorherigen Ansprüche, bei der ein Arbeitsmodus mit einem Satz von Daten und/oder Funktionen verknüpft ist, der sich auf die Betriebsparameter des Betätigungssystems (20) bezieht.

13. Vorrichtung gemäß einem der vorherigen Ansprüche, mit einer Datenempfangs-/-übertragungseinrichtung zum Senden von Befehlen und zum Programmieren von verschiedenen Betätigungssystemen (20) mittels eines Datennetzwerks (NT).

14. Vorrichtung gemäß Anspruch 13, mit einer Einrichtung zum Eingeben von Betriebsparametern eines Betätigungssystems (20), das mit dem Netzwerk (20) verbunden ist, wie z. B. Funkcodes und/oder Informationen oder Daten, die durch einen drahtlosen Empfänger verwaltet werden, der bei dem Betätigungssystem (20) vorhanden ist.

15. Vorrichtung gemäß Anspruch 10, wobei die Empfangs/Übertragungseinrichtung einen GSM-Transceiver aufweist.

16. Vorrichtung gemäß einem der vorherigen Ansprüche, wobei das Betätigungssystem (20) eine bewegbare Barriere ist.

## Revendications

1. Dispositif de programmation (10) des paramètres d'exploitation d'un système d'actionnement (20), ledit dispositif de programmation (10) et ledit système d'actionnement (20) étant aptes à se transmettre mutuellement des données, ledit dispositif de programmation (10) comprenant un affichage (12), pour afficher des données et/ou des fonctions du système d'actionnement, **caractérisé en ce qu'**il opère avec au moins deux modes de fonctionnement, et **en ce qu'**au moins un ensemble de données et/ou de fonctions est associé d'une manière définie de façon unique à chacun desdits au moins deux modes de fonctionnement, et **en ce que** le premier mode de fonctionnement comprend moins de données et/ou de fonctions que le second mode de fonctionnement, dans lequel le moyen d'affichage (16 ; 30) est apte à afficher de manière sélective, et de manière organisée, sur l'affichage (12), des éléments dudit au moins un ensemble de données et/ou de fonctions.

2. Dispositif selon la revendication 1, **caractérisé en ce que** lesdits au moins deux modes de fonctionnement comprennent un mode de fonctionnement utilisateur apte à accéder aux fonctions nécessaires à l'utilisation du système d'actionnement (20).

3. Dispositif selon l'une quelconque des revendications précédentes, **caractérisé en ce que** lesdits au moins deux modes de fonctionnement comprennent un mode de fonctionnement d'installation apte à accéder aux fonctions nécessaires à la programmation du système d'actionnement (20).

4. Dispositif selon l'une quelconque des revendications précédentes, **caractérisé en ce que** lesdits au moins deux modes de fonctionnement comprennent un mode de fonctionnement de diagnostic/ système apte à vérifier et à modifier des paramètres d'exploitation.

5. Dispositif selon l'une quelconque des revendications précédentes, comprenant un moyen de sélection (P1, P2, ..., P6) pour sélectionner des éléments faisant partie dudit au moins un ensemble de données et/ou de fonctions sur l'affichage (12).

6. Dispositif selon l'une quelconque des revendications précédentes, comprenant une interface de commande (P5, P6) au moyen de laquelle l'exécution de fonctions présentes dans ledit au moins un ensemble peut être mise en oeuvre.

7. Dispositif selon l'une quelconque des revendications précédentes, dans lequel le moyen d'affichage (16, 30) est prédéfini en vue d'agencer l'ensemble de données et/ou de fonctions dans des menus.

8. Dispositif selon l'une quelconque des revendications précédentes, dans lequel le moyen d'affichage (16, 30) est prédéfini en vue d'afficher un masque permettant d'insérer un code d'accès.

9. Dispositif selon l'une quelconque des revendications précédentes, comprenant un moyen pour sélectionner le mode de fonctionnement.

10. Dispositif selon l'une quelconque des revendications précédentes, comprenant un moyen pour recevoir/transmettre des données, depuis et vers une unité de commande à distance, le moyen de réception/transmission étant intégré au dispositif de manière à permettre la commande à distance de celui-ci.

11. Dispositif selon l'une quelconque des revendications précédentes, dans lequel un mode de fonctionnement est associé à un ensemble de données et/ou de fonctions connexes à l'état du système d'actionnement (20).

12. Dispositif selon l'une quelconque des revendications précédentes, dans lequel un mode de fonctionnement est associé à un ensemble de données et/ou de fonctions connexes aux paramètres d'exploitation du système d'actionnement (20).

13. Dispositif selon l'une quelconque des revendications précédentes, comprenant un moyen de réception/transmission de données pour envoyer des commandes et pour programmer une multitude de systèmes d'actionnement (20) au moyen d'un réseau de données (NT).

14. Dispositif selon la revendication 13, comprenant un moyen pour accéder à des paramètres d'exploitation d'un système d'actionnement (20) connecté au réseau (20), tels que des codes radio et/ou des informations radio ou encore des données gérées par un récepteur sans fil présent dans le système d'actionnement (20).

15. Dispositif selon la revendication 10, dans lequel le moyen de réception/transmission comprend un émetteur-récepteur GSM.

16. Dispositif selon l'une quelconque des revendications précédentes, dans lequel le système d'actionnement (20) est une barrière mobile.
